# EUROPEAN PATENT APPLICATION

(11) **EP 4 369 274 A1**
(43) Date of publication of application: **15.05.2024**
(21) Application number: 22206680.5
(22) Date of filing: 10.11.2022
(51) Int. Cl.: G06Q 20/40, G06Q 20/42, G06Q 20/20, G06Q 20/38

(54) **METHOD FOR AUTHORIZING A PAYMENT TRANSACTION**

(71) Applicant: IPCO 2012 Limited, London EC4R 3AB (GB)
(72) Inventor: GLADKAYA, Elena, London, E14 7FE (GB); MURARKA, Manish, London, SW1P 2BD (GB)
(74) Representative: Gill Jennings & Every LLP

(57) **Abstract**

A system for securely facilitating a payment transaction, the system comprising a transaction routing information node, at least one payment service provider PSP node, and at least one debtor service provider DSP node, wherein: each PSP node is configured to, when handling a payment transaction: obtain a proxy identifier for a consumer; generate a payment method request comprising the proxy identifier and a PSP identifier for the PSP node; and send the payment method request to the transaction routing information node; the transaction routing information node is configured to: receive the payment method request from the PSP node that is handling the payment transaction; obtain a payment routing record from a payment routing database, the payment routing record associating the combination of the proxy identifier and the PSP identifier with a payment method; send the payment method of the payment routing record to the PSP node that is handling the payment transaction, each PSP node is further configured to, when handling the payment transaction: receive the payment method; and complete the payment transaction using the payment method.

## Description

### FIELD OF THE INVENTION

The invention relates to computer systems for financial transactions, in which link records are maintained to facilitate payments via the links. For example, once a link is established, a one-click payment may be authorized by a consumer.

### BACKGROUND

Generally, it is desirable minimise the extent to which consumers are required to supply their financial details or personal information or preferences at the time of performing a transaction, both to improve convenience and to improve security.

In existing systems, a proxy identifier (such as a telephone number, an email address or a government-issued personal identifier) can be provided by the consumer at the time of performing the transaction, and this proxy identifier can be used to look-up corresponding financial details to complete the transaction. For example, a transaction facilitating entity may store a consumer digital identity linking the proxy identifier to a payment channel (e.g. bank account, card or digital wallet).

Additionally, the consumer digital identity can be linked to a merchant. The link between the consumer digital identity and the merchant can be maintained, even if the linked payment channel changes.

However, existing systems based on proxy identifiers have limited flexibility. In existing systems, a proxy can only be linked to one payment channel, and switching the proxy to link to a different payment channel can require reconstructing the entire consumer digital identity and merchant links.

As a result, a consumer using a proxy for authorization is restricted to a single payment channel, unless they go through a complex process to change the payment channel, or they create multiple digital identities associated with different proxies. The reconstruction of a digital identity or creation of multiple digital identities also increases the complexity of transaction processing for the merchant.

### SUMMARY OF INVENTION

In view of the above, it is desirable to provide a computer system with more flexible support for authorizing transactions using proxies.

According to a first aspect, the present invention provides a system for securely facilitating a payment transaction, the system comprising a transaction routing information node, at least one payment service provider PSP node, and at least one debtor service provider DSP node, wherein: each PSP node is configured to, when handling a payment transaction: obtain a proxy identifier for a consumer; generate a payment method request comprising the proxy identifier and a PSP identifier for the PSP node; and send the payment method request to the transaction routing information node; the transaction routing information node is configured to: receive the payment method request from the PSP node that is handling the payment transaction; obtain a payment routing record from a payment routing database, the payment routing record associating the combination of the proxy identifier and the PSP identifier with a payment method; and send the payment method of the payment routing record to the PSP node that is handling the payment transaction, each PSP node is further configured to, when handling the payment transaction: receive the payment method; and complete the payment transaction using the payment method.

According to a second aspect, the present invention provides a computer-implemented method performed by a transaction routing information node for securely facilitating a payment transaction in a network, the method comprising: receiving a payment method request from a payment service provider PSP node, wherein the payment method request comprises a PSP identifier for the PSP node and a proxy identifier for a consumer; obtaining a payment routing record from a payment routing database, the payment routing record associating the combination of the proxy identifier and the PSP identifier with a payment method; and sending the payment method to the PSP node.

By linking a payment method to a combination of a proxy identifier and a PSP identifier, proxies can be used more flexibly for facilitating payment transactions.

In some embodiments of the second aspect, the proxy identifier comprises an email address, a telephone number, a government-issued personal identifier or a proxy identifier issued by a DSP, or any other uniquely-issued and acceptable identifier.

In some embodiments of the second aspect, the payment method request comprises a transaction type; and the method comprises, if no payment routing record exists matching the transaction type, determining not to send the payment method to the PSP node. For example, each payment routing record may comprise one or more transaction types, and the payment routing record may match the transaction type if the payment routing record comprises the transaction type of the payment method request. Additionally or alternatively, the payment routing record may match the transaction type if the payment routing record comprises a general transaction type that includes a specific transaction type of the payment method request. Furthermore, the payment routing record may match the transaction type of the payment method request if the payment routing record does not comprise a transaction type. By including a transaction type in the payment method request, the complexity of rules for obtaining a payment method based on a proxy identifier can be increased, such that proxy identifiers can be used more flexibly and conveniently.

In some embodiments of the second aspect, the payment routing record further comprises a permission level, the permission level being: payment information can be provided for all payments; payment information can be provided for certain transaction types; payment information can be provided for scheduled payments; or manual authorization is required to provide payment information. By setting a permission level for the payment routing record, the complexity of rules for obtaining a payment method based on a proxy identifier can be increased, such that proxy identifiers can be used more flexibly and conveniently.

Furthermore, in embodiments using a permission level, the method may further comprise, before sending the payment method to the PSP node: if the permission level is set to certain transaction types and the payment method is requested for an unpermitted transaction type, or if the permission level is set to scheduled payments and the payment method is requested for an unscheduled payment, or if the permission level is set to manual authorization: requesting manual authorization from the consumer; or requesting authorization from a debtor service provider DSP associated with the payment method; or determining not to send the payment method to the PSP node.

In some embodiments of the second aspect, the method comprises, before receiving the payment method request: receiving a payment routing request comprising the proxy identifier and the PSP identifier; checking that a consumer profile including the proxy identifier exists in a consumer profile database; storing a payment routing record in the payment routing database associating the combination of the proxy identifier and the PSP identifier with the payment method, wherein the payment method is a default payment method associated with the proxy identifier or the payment method is a specified payment method included with the payment routing request. Such a payment method request may, for example, be sent by a DSP node or a PSP node which is expected to participate in a future transaction based on the payment routing record.

A plurality of such payment routing requests can be used to configure flexible usage of proxy identifiers.

For example, the method may comprise receiving a plurality of payment routing requests each comprising the proxy identifier, wherein each of the plurality of payment routing requests comprises a respective different PSP identifier; and storing a respective payment routing record in the payment routing database associating each combination of the proxy identifier and a respective different PSP identifier with a respective payment method. In this example, the consumer can use the same proxy identifier (e.g. their email address) with multiple PSPs (merchants, banks and so on), and each PSP can use a different payment method to complete transactions, despite obtaining the same proxy identifier from the consumer at the time of the transaction.

In another example, the method may comprise receiving a plurality of payment routing requests each comprising the PSP identifier, wherein each of the plurality of payment routing requests comprises a respective different proxy identifier; and storing a respective payment routing record in the payment routing database associating each combination of the respective different proxy identifier and the PSP identifier with a respective payment method. In this example, the consumer can choose between multiple different proxy identifiers when performing transactions with the same PSP, in order to select which payment method will be used for each transaction.

In another example, the method may comprise receiving a plurality of payment routing requests each comprising the PSP identifier and the proxy identifier, wherein each of the plurality of payment routing requests comprises a respective different transaction type identifier; and storing a respective payment routing record in the payment routing database associating each combination of the proxy identifier, the PSP identifier and the respective different transaction type identifier with a respective payment method. In this example, the consumer may provide the same proxy identifier to the same PSP for multiple transactions, and different payment methods may automatically be selected depending upon a transaction type of each transaction.

In another example, the method may comprise receiving a plurality of payment routing requests each comprising the PSP identifier and the proxy identifier, wherein each of the plurality of payment routing requests comprises a respective different permission level; and storing a respective payment routing record in the payment routing database associating each combination of the respective different proxy identifier and the PSP identifier with a respective payment method. In this example, the consumer may provide the same proxy identifier to the same PSP for multiple transactions, and different payment methods may automatically be selected depending upon which permission level is applicable to a current transaction. For example, if the permission level of one payment routing record is set to require manual authorization, the transaction routing information node may attempt to identify an alternative applicable routing record before triggering a request for manual authorization. In another example, different payment routing records may have permission for different sets of scheduled payments or different payment limits or different payment times, and a payment routing record may be automatically selected with a permission level that matches properties of a current transaction.

The above examples of different pluralities of payment routing requests can of also be combined together to give a greater set of stored payment routing records.

In some embodiments of the second aspect, the method comprises, before receiving the payment routing request: receiving a registration request comprising the proxy identifier and the default payment method; and storing a default payment record in the payment routing database associating the proxy identifier with the default payment method. By setting a default payment method, a consumer can enable payments using proxy identifiers without the need to trigger storing of a payment routing record for each PSP. As such, proxy identifiers can be used flexibly without making the system inconvenient to initially set-up.

In some embodiments of the second aspect, the payment method comprises a debtor service provider DSP identifier, and the payment routing request is received from a debtor service provider DSP associated with the DSP identifier. By enabling the DSP to trigger storing of payment routing records, appropriate payment routing records can be stored without making the system inconvenient for the consumer to initially set-up.

According to a third aspect, the present invention provides a transaction routing information node configured to perform a method according to the second aspect.

According to a fourth aspect, the present invention provides a non-transitory storage medium storing computer program instructions which, when executed by a computer, cause the computer to perform a method according to the second aspect.

### BRIEF DESCRIPTION OF DRAWINGS

Figure 1 is a schematic network diagram of a system for securely facilitating a payment transaction;
Figure 2 is a schematic network diagram of a system for storing and obtaining payment routing records;
Figure 3 is a schematic flow chart of a method for securely facilitating a payment transaction;
Figure 4 is a schematic illustration of a consumer profile associated with a consumer;
Figure 5 is a schematic illustration of an example implementation comprising a process for building a consumer profile;
Figure 6 is a schematic illustration of an example implementation comprising a process for setting a default payment method for a debtor service provider;
Figure 7 is a schematic illustration of an example implementation comprising a process for generating and using a payment token.

### DETAILED DESCRIPTION

Various aspects of the invention are now described with reference to the accompanying drawings. The description and specific examples included herein are intended for purposes of illustration only and are not intended to limit the scope of the present disclosure.

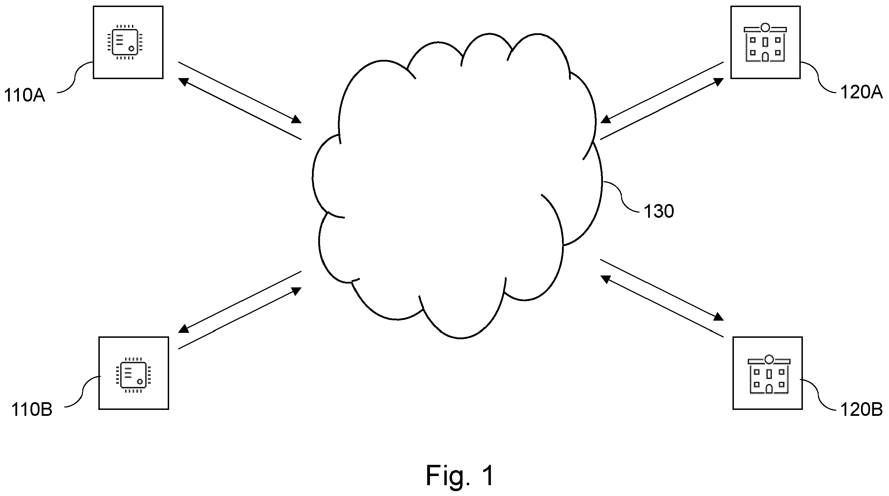

Figure 1 schematically shows a system for securely facilitating a payment transaction. In the system, any of a plurality of payment service provider (PSP) nodes 110A, 110B can perform a transaction with any of a plurality of debtor service provider (DSP) nodes 120A, 120B via a network 130.

Herein, a payment service provider (PSP) is any entity which may initiate a payment transaction such as a merchant, a utility company, or a bank. A PSP node can be implemented using any localised computer apparatus or distributed computer system, such as a physical server or a cloud processing service.

Herein, a debtor service provider (DSP) is any entity which may complete a payment transaction such as a bank or a cryptocurrency wallet service. A DSP node can be implemented using any localised computer apparatus or distributed computer system, such as a physical server or a cloud processing service.

The network 130 connects between the PSP nodes 110A, 110B and the DSP nodes 120A, 120B, and incorporates a transaction routing information node for securely providing a payment method for completing a transaction, when the consumer has provided a (less secure) proxy identifier. The transaction routing information node may be a platform that is independent from the PSP nodes 110A, 110B and the DSP nodes 120A, 120B. This independence means that transaction information is not lost in circumstances such as when a consumer changes their main banking provider. Furthermore, this independence means that all banks can use a common platform for facilitating proxy-based transactions.

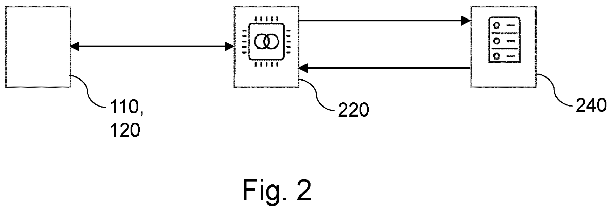

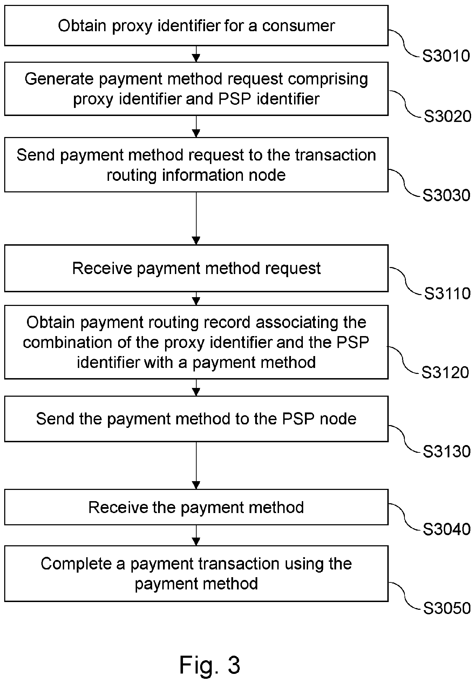

Figure 2 is a schematic network diagram of a system for storing and obtaining payment routing records. Figure 3 is a schematic flow chart of a method for securely facilitating a payment transaction, which can be applied in the system of Figure 2.

The system of Figure 2 comprises a transaction routing information node 220 and a consumer profile database node 240.

The transaction routing information node 220 stores payment routing records in a payment routing database. The payment routing records map proxy identifiers to payment methods, so that a payment method can be determined based on a proxy identifier provided by a consumer. Payment routing records may be created or amended by the consumer, by a DSP associated with the consumer or even by a PSP associated with the consumer.

Each payment method in a payment routing record stored at the transaction routing information node 220 may comprise payment information such as an account number, a sort code, a primary account number (PAN) and so on. Alternatively, each payment method may be a payment method identifier used to look-up payment information in order to complete a transaction. In other words, it is not necessary for the transaction routing information node 220 to ever store payment information, and the transaction routing information node 220 may instead be used to look up payment information from another entity.

The consumer profile database node 240 stores customer profiles in a customer profile database. The customer profiles indicate the proxy identifiers and payment methods which are available for a given customer.

The payment methods stored in a customer profile may comprise payment information such as an account number, a sort code, a primary account number (PAN) and so on. In this case, the transaction routing information node 220 can request payment information for a given payment method from the consumer profile database node 240. The customer profiles at the consumer profile database node 240 may be stored or updated by a PSP or DSP.

Amending a customer profile may require a higher level of access or may involve a higher level of authentication and/or verification when compared to creating or amending payment routing records. This may for example be because errors in the customer profile carry a higher risk than errors in a payment routing record. For example, an error in the customer profile may introduce an unintended third party to a transaction. On the other hand, payment routing records may only be created if a corresponding proxy identifier and payment method is available in the associated customer profile.

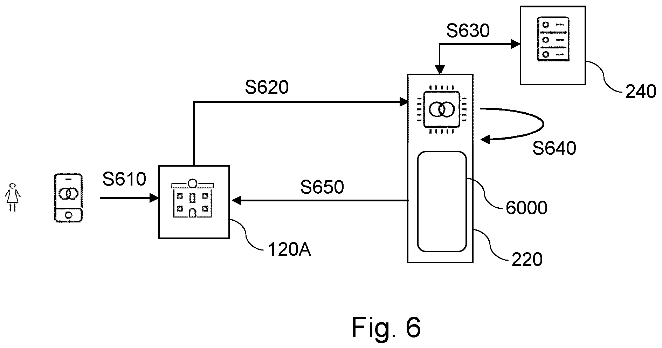

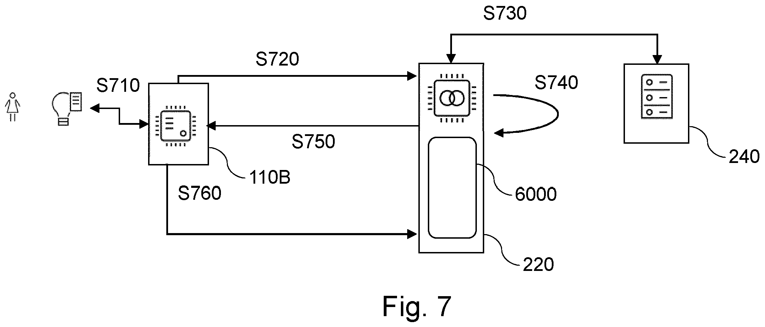

The transaction routing information node 220 is configured to receive a request from a DSP or PSP 110, 120. The request may for example be a request for a payment method, to which the transaction routing information node 220 replies based on its payment routing records and, if necessary, based on information obtained from the customer profile database node 240. Alternatively, the request may be a payment routing request to add or amend a payment routing record, to which the transaction routing information node 220 replies confirming whether or not the payment routing record was added/amended. A payment method request procedure is discussed below with respect to Figure 3. Payment routing request procedures are discussed below with respect to Figures 6 and 7.

In the above examples, the transaction routing information node 220 and the consumer profile database node 240 are separate entities. In other embodiments, the transaction routing information node 220 and consumer profile database node 240 may be combined into a single computer apparatus or computer system in order to reduce the time to obtain a relevant consumer profile before storing a payment routing record.

Referring to Figure 3, steps S3010 to S3030 and S3040 to S3050 are performed by a PSP node 110A, 110B which is attempting to complete a payment transaction based on a proxy identifier. Steps S3110 to S3130 are performed by the transaction routing information node (optionally together with the consumer profile database node).

The method of Figure 3 starts when a PSP node 110A is tasked with performing a payment transaction for a consumer.

At step S3010, a PSP node 110A obtains a proxy identifier for the consumer. The PSP node may, for example, obtain the proxy identifier from the consumer at the time of the transaction via a user interface such as a merchant website or a banking application. The user interface may for example be provided at a computer terminal or mobile device. Alternatively, the proxy identifier may be stored by the PSP node 110A as part of a PSP profile, for example in order to initiate automatic transactions such as billing for ongoing services.

At step S3020, the PSP node 110A generates a payment method request. The payment method request comprises at least the proxy identifier and a PSP identifier which identifies the PSP node 110A.

The payment method request may further comprise additional information such as a transaction type. The transaction type may indicate various properties of the intended transaction, such as the transaction value or the transaction purpose.

At step S3030, the PSP node 110A sends the payment method request to the transaction routing information node 220.

At step S3110, the transaction routing information node 220 receives the payment method request.

At step S3120, the transaction routing information node 220 obtains a payment routing record from the payment routing database. The obtained payment routing record is a payment routing record which matches the combination of the proxy identifier and the PSP identifier which were included in the payment method request.

If no matching payment routing request exists, then the transaction routing information node 220 may look externally to determine the payment method. For example, the transaction routing information node 220 may contact the consumer or a debtor service provider DSP associated with the consumer to request identification of a payment method. Alternatively, the transaction routing information node 220 may send a reply to the PSP node 100A indicating that the payment method request failed. Alternatively, the transaction routing information node 220 may simply drop the payment method request without replying.

Obtaining the payment routing record may additionally involve matching further features of the payment method request.

In one example, obtaining the payment routing record may comprise matching a transaction type of the payment method request to a payment routing record. In other words, a payment routing record may be configured only for certain types of transaction, and may not match to the payment method request even if the payment routing record includes the same proxy identifier and PSP identifier as the payment method request. Alternatively, a payment routing record may be configured for all transaction types, in which case it can match a payment method request with any transaction type or no specified transaction type.

In another example, obtaining the payment routing record may comprise identifying a payment routing record with a permission level that matches the payment method request. For example, a payment routing record may have an unlimited permission level which matches any payment method request. Alternatively, the payment routing record may only be permitted to be used for scheduled payments (in terms of specific permitted transactions, or a time range or value range in which transactions are permitted).

If more than one payment routing record matches the payment method request, then the transaction routing information node 220 may be configured to obtain a most relevant one of the matching payment routing records. For example, if the payment method request matches a first payment routing record having an unlimited permission level, and also matches a second payment routing record having permission only for the transaction type included with the payment method request, then it would be apparent that the second payment routing record is more specialised towards the envisaged transaction, and the second payment routing record is obtained in step S3120.

At step S3130, the transaction routing information node 220 extracts a payment method from the obtained payment routing record and sends the payment method to the PSP node 110A.

In some embodiments, the payment method in the obtained payment routing record stored at the transaction routing information node 220 comprises payment information such as an account number, a sort code, a primary account number (PAN) and so on.

In other embodiments, the payment method in the obtained payment routing record stored at the transaction routing information node 220 comprises a payment method identifier used to look-up payment information in order to complete a transaction. In such embodiments, the transaction routing information node 220 may send a payment information request to the customer profile database node 240 based on the payment method identifier. In response to the payment information request, the customer profile database node 240 may look up a corresponding payment method in a customer profile, and reply with payment information such as an account number, a sort code, a primary account number (PAN) and so on. The transaction routing information node 220 may then include the payment information with the payment method that is sent to the PSP node 110A.

At step S3140, the PSP node 110A receives the payment method.

At step S3150, the PSP node 110A completes the payment transaction using the received payment method. For example, once the PSP node 100A has the payment method, the PSP node 110A may use the network in a conventional manner (as in a manner which does not involve proxies) in order to communicate with a DSP node 120A specified in the payment method and complete the transaction.

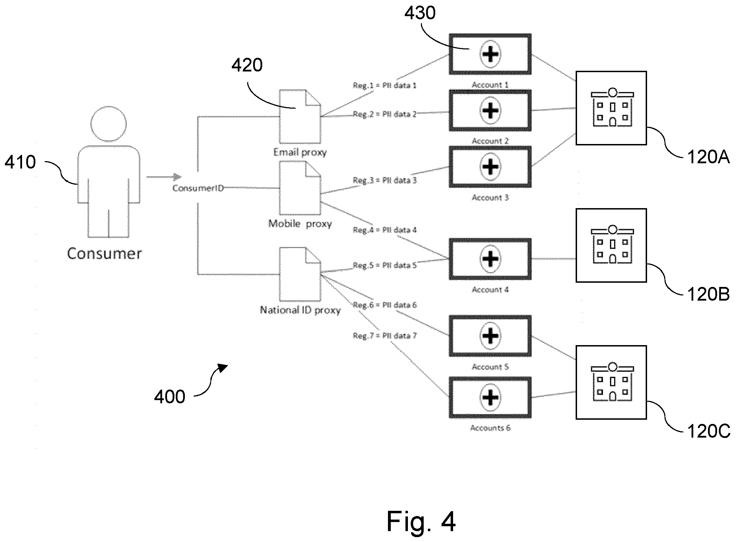

Figure 4 is a schematic illustration of a consumer profile associated with a consumer. The consumer profile represents the set of possible proxy identifiers which may be used by the consumer, and the set of possible payment methods which can be indicated by a proxy identifier.

More specifically, in Figure 4, a consumer 410 is associated with three proxy identifiers 420 - an email proxy, a mobile proxy and a national ID proxy. In turn, each of the proxy identifiers 420 is associated with one or more payment methods 430. The payment methods may, for example, be different cash accounts with a same DSP 120A.

The consumer profile may additionally comprise personally identifiable information, such as a consumer name, a consumer date of birth or a consumer address, associated with each of the payment methods 430.

Additionally, the consumer profile may comprise a consumer profile identifier for identifying the consumer profile at the consumer profile database node 240.

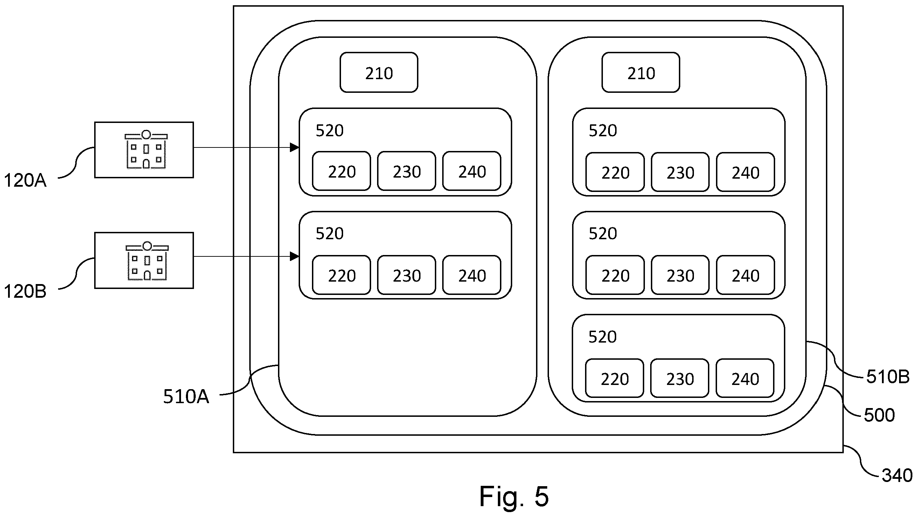

Figure 5 is a schematic illustration of an example implementation comprising a process for building a consumer profile.

In Figure 5, each of a plurality of DSP nodes 120A, 120B sends a DSP registration request to the consumer profile database node 240. This process is independent from using the transaction routing information node 220, and is performed before the consumer uses the DSP nodes 120A, 120B for transactions involving the transaction routing information node 220.

The DSP registration request is used to add one or more payment methods associated with the respective DSP to the consumer profile, so that the payment methods are available for use in payment routing records which can subsequently stored by the transaction routing information node 220 (as discussed below).

More specifically, as shown in Figure 5, the consumer profile database node 240 stores a consumer profile database 500. The consumer profile database 500 contains a plurality of consumer profiles 510A, 510B associated with respective different consumers. Each consumer profile may comprise a consumer profile identifier 410 which is used to identify consumer associated with the consumer profile or to look-up the consumer profile. Additionally, each consumer profile comprises one or more DSP registration records 520, each being stored in response to a DSP registration request. Each DSP registration record 520 comprises one or more proxy identifiers 420, one or more payment channels 430, and optionally comprises some personally identifiable information 440.

The processes shown in Figure 5 for different DSPs may be performed together, or may be performed individually. For example, each time a consumer registers with a new DSP (a new bank or other financial institution), a DSP registration request may be performed to add the new DSP to the consumer's consumer profile.

Figure 6 is a schematic illustration of an example implementation comprising a process for setting a default payment method for a debtor service provider.

The process of Figure 6 is only performed for a given consumer after a consumer profile for the consumer has been built.

Referring to Figure 6, at step S610, the consumer indicates to the DPS 120A that they wish to participate in using the transaction routing information node 220 for facilitating proxy-based transactions. Additionally, the consumer may indicate to the DPS 120A a default payment method for use when the transaction routing information node 220 receives a given proxy identifier and no more relevant payment routing records are present in the payment routing database 6000. The consumer may, for example, provide indication(s) to the DPS 120A using an app or website associated with the DPS 120A.

At step S620, the DPS 120A sends, to the transaction routing information node 220, a registration request comprising the proxy identifier and the default payment method.

At step S630, the transaction routing information node 220 contacts the consumer profile database node 240 to determine whether a consumer profile exists in which the proxy identifier of the registration request is available as a proxy identifier and the default payment method is available as a payment method. The consumer profile database node 240 may in some cases send the entire consumer profile to the transaction routing information node 220, if the consumer profile exists. Alternatively, the consumer profile database node 240 may simply confirm whether or not such a profile exists, without providing any extraneous information to the transaction routing information node 220 - this alternative may be preferable if the consumer profile contains personally identifiable information.

At step S640, if the consumer profile exists in which the proxy identifier of the registration request is available as a proxy identifier and the default payment method is available as a payment method, then the transaction routing information node 220 stores a payment routing record in the payment routing database associating the proxy identifier with the default payment method.

Figure 7 is a schematic illustration of an example implementation comprising a process for generating and using a payment token

Referring to Figure 7, at step S710, a creditor (e.g. issuer of bills for utility services) sends an indication to a payment service provider PSP node 110B to start a payment routing procedure.

At step S720, the PSP node 110B sends a payment routing request to the transaction routing information node 220 comprising a proxy identifier associated with the consumer and further comprising an identifier for a PSP node 110B. The payment routing request may further comprise any of a payment method, a transaction type and a permission level.

At step S730, the transaction routing information node 220 contacts the consumer profile database node 240 to determine whether a consumer profile including the proxy identifier exists in the consumer profile database. In some embodiments, if the payment routing request comprises a payment method, then the transaction routing information node 220 contacts the consumer profile database node 240 to determine whether a consumer profile including the proxy identifier and the payment method exists in the consumer profile database.

At step S740, if the consumer profile exists in which the proxy identifier (and the payment method, where present) of the payment routing request, then the transaction routing information node 220 stores a payment routing record in the payment routing database associating the proxy identifier with the PSP node 110B. The payment routing record stored in step S740 may update or replace a previously existing payment routing record in the payment routing database.

If the payment routing request includes a payment method, then the payment method is included in the payment routing record in association with the proxy identifier and the PSP node. If the payment routing request does not include a payment method, then the default payment method (discussed above with respect to Figure 6) may be included in the payment routing record in association with the proxy identifier and the PSP node. If the payment routing request does not include a payment method, and no default payment method has been configured, then step S740 may fail in some embodiments, in which case a payment token is not generated.

Additionally, if the payment routing request includes a transaction type and/or a permission level, then the transaction type and/or permission level are included in the payment routing record in association with the proxy identifier and the PSP node.

If step S740 was successful, then at step S750 the transaction routing information node 220 sends a response to the PSP node 110B including a transaction token. The transaction token may comprise the payment routing record stored in step S740, or may comprise a hash of the payment routing record or a reference to the payment routing record. The token may be valid permanently, or may have time-limited validity.

At step S760, the PSP node 110B can use the token to complete a payment transaction. For example, the PSP node 110B may use the token to push transaction information to a separate transaction clearing entity. The transaction clearing entity may be combined with the transaction routing information node such that the transaction information routing node can act as an intermediary between a PSP node 110B and a DSP node 120B.

In another example, a debtor service provider DSP node 120B may also generate a payment routing request and initiate a payment transaction using steps similar to the above procedure described with reference to Figure 7.

Over time, a plurality of payment routing records may be added to the payment routing database using method steps such as those described above (in particular steps S620 to S640 or S720 to S740). Each payment routing record may relate to a different combination of a proxy identifier, a PSP node, an optional transaction type, and an optional permission level, with each combination being associated with a respective payment method. For example, a plurality of the payment routing records may relate to the same proxy identifier but different PSP nodes. Another plurality of the payment routing records may relate to the same PSP node but different proxy identifiers. Another plurality of the payment routing records may relate to the same proxy identifier and the same PSP node, but different transaction types or different permission levels. As a result, payment methods can be flexibly defined for each of these possible combinations.

Additionally, it should be noted that multiple payment routing requests may be combined together into a single message sent to the transaction routing information node.

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense. While the disclosure has been described in terms of various specific embodiments, those skilled in the art will recognize that the disclosure can be practiced with modification within the scope of the claims.

As used herein, the term "non-transitory computer-readable media" is intended to be representative of any tangible computer-based device implemented in any method or technology for short-term and long-term storage of information, such as, computer-readable instructions, data structures, program modules and submodules, or other data in any device. Therefore, the methods described herein may be encoded as executable instructions embodied in a tangible, non-transitory, computer readable medium, including, without limitation, a storage device, and/or a memory device. Such instructions, when executed by a processor, cause the processor to perform at least a portion of the methods described herein. Moreover, as used herein, the term "non-transitory computer-readable media" includes all tangible, computer-readable media, including, without limitation, non-transitory computer storage devices, including, without limitation, volatile and non-volatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

As will be appreciated based on the foregoing specification, the above-described embodiments of the disclosure may be implemented using computer programming or engineering techniques including computer software, firmware, hardware or any combination or subset thereof, wherein the technical effect is enabling sensitive data such a cryptogram to be passed to the devices in a secure manner. Any such resulting program, having computer-readable code means, may be embodied or provided within one or more computer readable media, thereby making a computer program product, i.e., an article of manufacture, according to the discussed embodiments of the disclosure. The article of manufacture containing the computer code may be made and/or used by executing the code directly from one medium, by copying the code from one medium to another medium, or by transmitting the code over a network.

## Claims

1. A system for securely facilitating a payment transaction, the system comprising a transaction routing information node, at least one payment service provider PSP node, and at least one debtor service provider DSP node, wherein:
each PSP node is configured to, when handling a payment transaction:
obtain a proxy identifier for a consumer;
generate a payment method request comprising the proxy identifier and a PSP identifier for the PSP node; and
send the payment method request to the transaction routing information node;
the transaction routing information node is configured to:
receive the payment method request from the PSP node that is handling the payment transaction;
obtain a payment routing record from a payment routing database, the payment routing record associating the combination of the proxy identifier and the PSP identifier with a payment method;
send the payment method of the payment routing record to the PSP node that is handling the payment transaction,
each PSP node is further configured to, when handling the payment transaction:
receive the payment method; and
complete the payment transaction using the payment method.

2. A computer-implemented method performed by a transaction routing information node for securely facilitating a payment transaction in a network, the method comprising:
receiving a payment method request from a payment service provider PSP node, wherein the payment method request comprises a PSP identifier for the PSP node and a proxy identifier for a consumer;
obtaining a payment routing record from a payment routing database, the payment routing record associating the combination of the proxy identifier and the PSP identifier with a payment method; and
sending the payment method to the PSP node.

3. A method according to claim 2, wherein the proxy identifier comprises an email address, a telephone number, a government-issued personal identifier or a proxy identifier issued by a DSP or any other uniquely-issued and acceptable identifier.

4. A method according to claim 2 or claim 3, wherein:
the payment method request comprises a transaction type; and
the method comprises, if no payment routing record exists matching the transaction type, determining not to send the payment method to the PSP node.

5. A method according to any of claims 2 to 4, wherein the payment routing record further comprises a permission level, the permission level being:
payment information can be provided for all payments;
payment information can be provided for certain transaction types;
payment information can be provided for scheduled payments; or
manual authorization is required to provide payment information.

6. A method according to claim 5, wherein method further comprises, before sending the payment method to the PSP node:
if the permission level is set to certain transaction types and the payment method is requested for an unpermitted transaction type, or if the permission level is set to scheduled payments and the payment method is requested for an unscheduled payment, or if the permission level is set to manual authorization:
requesting manual authorization from the consumer; or
requesting authorization from a debtor service provider DSP associated with the payment method; or
determining not to send the payment method to the PSP node.

7. A method according to any of claims 2 to 6, wherein the method comprises, before receiving the payment method request:
receiving a payment routing request comprising the proxy identifier and the PSP identifier;
checking that a consumer profile including the proxy identifier exists in a consumer profile database;
storing a payment routing record in the payment routing database associating the combination of the proxy identifier and the PSP identifier with the payment method,
wherein the payment method is a default payment method associated with the proxy identifier or the payment method is a specified payment method included with the payment routing request.

8. A method according to claim 7, comprising:
receiving a plurality of payment routing requests each comprising the proxy identifier, wherein each of the plurality of payment routing requests comprises a respective different PSP identifier; and
storing a respective payment routing record in the payment routing database associating each combination of the proxy identifier and a respective different PSP identifier with a respective payment method.

9. A method according to any of claims 7 to 8, comprising:
receiving a plurality of payment routing requests each comprising the PSP identifier, wherein each of the plurality of payment routing requests comprises a respective different proxy identifier; and
storing a respective payment routing record in the payment routing database associating each combination of the respective different proxy identifier and the PSP identifier with a respective payment method.

10. A method according to any of claims 7 to 9, comprising:
receiving a plurality of payment routing requests each comprising the PSP identifier and the proxy identifier, wherein each of the plurality of payment routing requests comprises a respective different transaction type identifier; and
storing a respective payment routing record in the payment routing database associating each combination of the proxy identifier, the PSP identifier and the respective different transaction type identifier with a respective payment method.

11. A method according to any of claims 7 to 10, comprising:
receiving a plurality of payment routing requests each comprising the PSP identifier and the proxy identifier, wherein each of the plurality of payment routing requests comprises a respective different permission level; and
storing a respective payment routing record in the payment routing database associating each combination of the respective different proxy identifier and the PSP identifier with a respective payment method.

12. A method according to any of claims 7 to 11, wherein the method comprises, before receiving the payment routing request:
receiving a registration request comprising the proxy identifier and the default payment method; and
storing a default payment record in the payment routing database associating the proxy identifier with the default payment method.

13. A method according to any of claims 7 to 12, wherein the payment method comprises a debtor service provider DSP identifier, and the payment routing request is received from a debtor service provider DSP associated with the DSP identifier.

14. A transaction routing information node configured to perform a method according to any of claims 2 to 13.

15. A non-transitory storage medium storing computer program instructions which, when executed by a computer, cause the computer to perform a method according to any of claims 2 to 13.
